# EUROPEAN PATENT APPLICATION

(11) **EP 2 048 823 A1**
(43) Date of publication of application: **15.04.2009**
(21) Application number: 07301455.7
(22) Date of filing: 12.10.2007
(51) Int. Cl.: H04L 12/28, H04L 12/18

(54) **Method and apparatus for power management in communication system**

(71) Applicant: Thomson Licensing, 92100 Boulogne-Billancourt (FR)
(72) Inventor: He, Jong, 100084, BEIJING (CN); Ma, Xiao Jun, 100085, BEIJING (CN); Zhang, Huan Qiang, 100085, BEIJING (CN); Li, Jun, INDIANAPOLIS, IN 46207 (US); Wang, Charles, 100012, Beijing (CN)
(74) Representative: Ruellan-Lemonnier, Brigitte

(57) **Abstract**

A method and apparatus for power management in the communication system, wherein the method for transmitting data from an access point to communication units comprising: assigning, by the access point, a first association identifier in a message to each of the communication units respectively to indicate the presence of respective buffered multicast data (501); setting, by the access point, the first association identifiers corresponding to the communication units (503) belonging to one or more multicast groups to receive multicast data buffered at the access point currently (502); and broadcasting, by the access point, the message to awake the communication units belonging to the one or more multicast groups (504) so as to transmit the buffered multicast data thereto.

## Description

### FIELD OF THE INVENTION

The present invention relates to communication system, and more particularly, to a method and apparatus for power saving in the communication system.

### BACKGROUND OF THE INVENTION

Energy conservation is an important issue in the communication system, especially in a Wireless Local Area Networking (WLAN) system. With the proliferation of portable computing and mobile technology, energy conservation has received more and more attention. To make the best use of battery resources and prolong a device's battery life, a power saving mechanism is proposed within the IEEE802.11 standards. As specified in the standard, an IEEE802.11 based wireless adapter, or station, can be in one of two states at any time, awake or sleep. The sleep state usually consumes an order of magnitude less power than the awake state. Therefore, the task of the power saving mechanism is to maximize time spent in the sleep state and minimize time spent in the awake state, while not degrading the networking performance of the device.

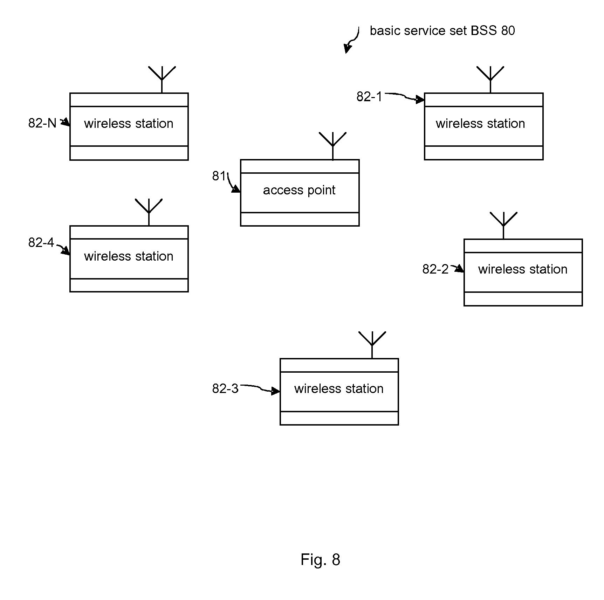

Fig.8 shows a simplified block diagram of a basic service set (BSS) (80) with access point (AP) (81) and multiple communication units, such as wireless stations (82-1 to 82-n). Each of the stations has the two states or power modes as defined for a typical IEEE802.11 wireless adapter. The modes are defined as constant active mode (CAM) and power saving mode (PSM). In the CAM, the wireless adapter remains in an awake state during its entire working time, monitoring the wireless channel and ready to receive or transmit frames including data at any time. An AP(81) delivers frames destined for a station in CAM without buffering. Obviously the CAM causes substantial power consumption for a wireless station which has limited battery life.

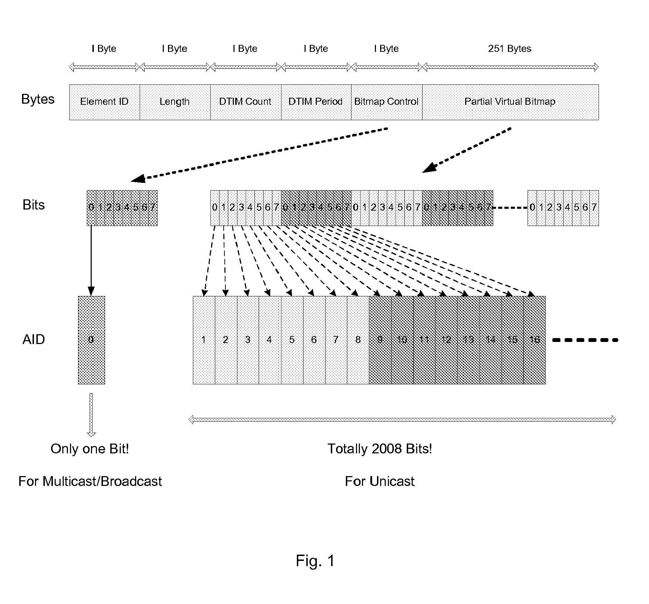

A station in PSM (any of stations 82) cooperates with its associated AP (81) to achieve power savings. Within the IEEE802.11 standard, the general idea is for the AP to buffer frames for stations in PSM and to synchronize these stations to wake up at the same time. At the wakeup time, there starts a window where the AP announces its buffer status to the associated wireless stations by using a beacon frame message. The AP periodically transmits the beacon frame message and a wireless station in PSM shall power up to listen to the beacon to check whether there are data frames buffered in the AP. The stations determine whether there are buffered data frames by analyzing bitmap information in a traffic indication map (TIM) element contained in the beacon. The TIM structure is depicted in fig.1. If there is buffered data, the receiver of the station stays awake until the data has been delivered. A beacon may indicate whether there are unicast data frames or broadcast/multicast (B/M) data frames buffered at the AP. A station enters into the PSM state only after ensuring that no unicast data frames destined for it or B/M data frames for a group are pending at the AP, otherwise it shall stay awake to receive frames.

The multicast frames are defined herein as frames that are intended to be received by selected wireless stations that are assigned to a multicast group with a multicast group address to which the multicast frames are directed. The broadcast frames are intended to be received by all wireless stations. The unicast frames are defined herein as frames that are intended to be received by one wireless station.

In the unicast case, the AP buffers incoming frames destined to a power saving (PS) station, announces this event through the TIM in a beacon frame, and then these buffered frames are retrieved by the PS station through PS-Poll requests. In the B/M case, the AP buffers all incoming broadcast/multicast frames if any client in the BSS is in PSM, and sends them out without polling after a beacon with a delivery traffic indication message (DTIM) has been transmitted. Thus, a DTIM is a special TIM transmitted with a DTIM beacon interval.

The TIM element of the beacon frame plays a key role in the overall procedure. It provides a one to one mapping between bits therein and wireless stations through the association identifiers (AIDs). AIDs are assigned to each client within a basic service set (BSS) during the association procedure. When a client joins a BSS the AP gives the client an AID. Each station associated with the AP is assigned one bit in the bitmap of a TIM with the position of the bit being related to the AID the station. The bit number N corresponds with the AID N in the TIM bitmap. If the bit N is set in the TIM of a beacon, the existence of buffered unicast frames for the station AID N is indicated.

With reference to Figure 1, each field of the TIM structure is described as follows: Element ID (one byte) is an identification of this length-variable element in the beacon frame, and its value 5 indicates that this is a traffic indication map (TIM). The Length field (one byte) gives the total length of the information field, which consists of the following four fields:
1) DTIM (delivery traffic indication message) count (one byte) defines the number of beacons should be sent out before the next DTIM appears. This value decreases with each beacon, and after reaching zero it returns to the initial value; zero is an indicator of a DTIM. Thus DTIM is a special TIM, with its DTIM count field equals zero.
2) DTIM period represents the number of beacon intervals between successive DTIMs. Note that the DTIM count should cycle through from this value to 0.
3) Bitmap Control field (one byte) contains two subfields. Bit 0 is used for the traffic indicator bit of association ID 0 (AID 0), which is reserved for B/M traffic. This bit should be set to 1 if there is one or more B/M frames buffered at AP for any stations in this BSS. The other 7 bits are used for the offset of the virtual bitmap. The offset infers the exact part of the virtual bitmap that has been transmitted.
4) Partial virtual bitmap (251 bytes) is an important feature of the TIM or DTIM element. Each bit of the virtual bitmap matches a wireless station associated with this AP, and its association ID (AID) is the position of the corresponding bit in the whole bitmap. Theoretically, an AP can support as many as 2008 stations in one BSS. Whenever a frame destined for a wireless station in power saving mode arrives, it should be buffered and its corresponding bit in the virtual bitmap should be set in the next TIM of the beacon, calling for the corresponding station to fetch the frames at the AP afterwards.

As shown in Figure 1, a special bit corresponding to AID 0 is reserved for B/M frames, and the bitmap control bit 0 corresponds to AID 0. If there is at least one associated station works in PSM, then any incoming B/M frames at the AP causes this bit to be set to 1 and the B/M frames are buffered. Thus, while the TIM can uniquely identify a station with buffered unicast frames at the AP, the one bit corresponding to AID 0 (referred as the B/M bit in the following text) can only indicate the existence of B/M frames without identifying the group or specific stations having buffered B/M frames. If the B/M bit is set in the TIM, then it requires that all PSM stations stay awake in order not to miss any B/M data.

Generally the PSM outperforms the CAM in terms of power consumption, at the cost of networking performance, such as delay and throughput. However, in practice the current PSM is still not efficient enough to achieve power conservation. The current mechanism uses one bit to indicate the existence of buffered B/M frames at the AP. Therefore, the current mechanism does not differentiate between multicast frames and broadcast frames, and moreover, multicast frames belonging to different multicast groups are treated as the same. This coarse granularity makes the scheme work inefficiently in multicast environments. The major deficiency lies in that a wireless station has to stay in the active state whenever there are multicast frames transmitting at the AP, even if these frames are destined to other multicast groups than the group this station belongs to, or a worse case that this station does not join any multicast group any multicast group at all. The energy used to scout multicast traffic that will not be received by a station is an unnecessary waste.

Therefore, it is needed to create an arrangement and method that addresses the above mentioned problem.

### SUMMARY OF THE INVENTION

An object of the invention is to resolve the above problems, especially to provide a method and apparatus for power saving in the communication system by selectively awake the communication units to receive the buffered multicast frames at the access point.

According to one aspect of the invention, provide a method in a communication system for transmitting data from an access point to communication units capable of operating in a power-saving mode, the method comprising: assigning, by the access point, an first association identifier in a message to each of the communication units respectively to indicate the presence of respective buffered multicast data; setting, by the access point, the first association identifiers corresponding to the communication units belonging to one or more multicast groups to receive multicast data buffered at the access point currently; and broadcasting, by the access point, the message to awake the communication units belonging to the one or more multicast groups so as to transmit the buffered multicast data thereto.

According to another aspect of the invention, provide an access point in a communication system for transmitting data to communication units capable of operating in a power-saving mode, the access point comprising: a memory for buffering data to be transmitted to the communication units which are operating in the power-saving mode; and a processor for assigning an first association identifier in a message to each of the communication units respectively to indicate the presence of respective buffered multicast data; and setting the first association identifiers corresponding to the communication units belonging to one or more multicast groups to receive multicast data buffered at the access point currently; and a transmitter for transmitting the message to awake the communication units belonging to the one or more multicast groups and transmitting the buffered multicast data thereto.

According to another aspect of the invention, provide a method used in a communication unit capable of operating in a power-saving mode for receiving data from an access point in a communication system, the method comprising: receiving a message from the access point through the communication system; checking an first association identifier for the communication unit in the message, which is pre-assigned by the access point to indicate the presence of buffered multicast data to be transmitted to the communication unit; and waking up to receive the multicast data if the first association identifier is set.

According to another aspect of the invention, provide a communication unit capable of operating in a power-saving mode in a communication system for receiving data from an access point, the communication unit comprising: a receiver for receiving data and a message from the access point; and a processor for cooperating with the receiver to receive a message from the access point through the communication system; check an first association identifier for the communication unit in the message, which is pre-assigned by the access point to indicate the presence of buffered multicast data including data to be transmitted to the communication unit; and wake up the communication unit to receive the multicast data if the first association identifier is set.

### BRIEF DESCRIPTION OF DRAWINGS

These and other aspects, features and advantages of the present invention will become apparent from the following description in connection with the accompanying drawings:
Fig. 1 is a diagram of a TIM structure of a beacon of the IEEE802.11 standard;
Fig. 2 is an exemplary diagram of a beacon with a newly designed TIM structure according to an embodiment of the invention;
Fig. 3 is an exemplary diagram of a beacon with another newly designed TIM structure according to the first embodiment of the invention;
Fig. 4 is an exemplary structure of a look-up table for mapping from a multicast group to the corresponding mobile stations;
Fig. 5 is a flow chart depicting a method for sending multicast/broadcast message in the communication system according to the embodiment of the invention;
Fig. 6 is an exemplary configuration of an access point in accordance with the present invention;
Fig. 7 is an exemplary configuration of an wireless station in accordance with the present invention; and
Fig. 8 is an exemplary configuration of a wireless network infrastructure of the communication system.

### DETAIL DESCRIPTION OF PREFERRED EMBODIMENTS

A description will now be given with reference to attached figures to illustrate many advantages/features of the present invention, according to various illustrative embodiments of the present invention.

### (First embodiment)

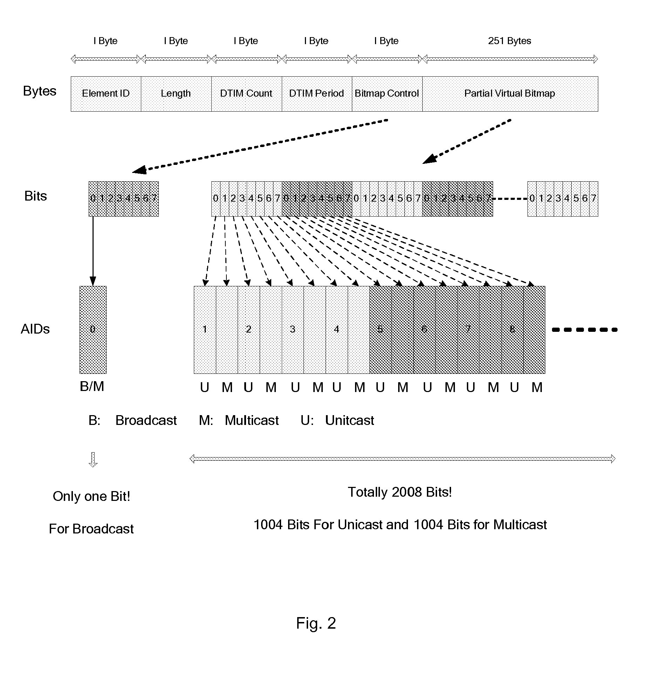

Fig.2 is an exemplary diagram of a beacon with a newly designed TIM structure according to the first embodiment of the invention. In the virtual bitmap, the bits for indicating the presence of buffered multicast frames (M) and unicast frames (U) for each of the stations are distinguished through a series of pair of bits. One bit in a pair is used for unicast frames of a station and the other for multicast frames of the station.

According to the arrangement of the TIM, any single wireless station is provided with two successive bits acting as indicators, one for the buffered unicast frames at AP (referred as a U bit), and the other for the multicast frames (referred as a M bit). Thus the number of bits for unicast frame is reduced from 2008 to its half 1004, and the number of supported stations decreases correspondently. However, this reduction is reasonable, as one BSS usually does not have more than 100 associated stations.

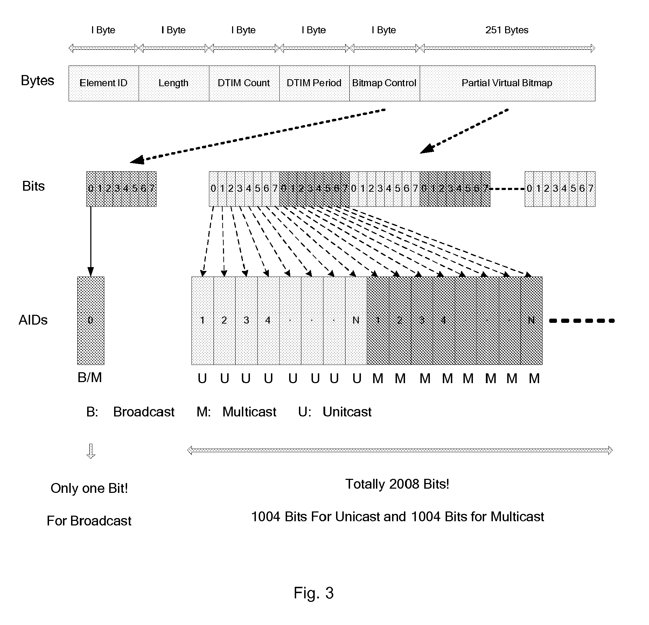

It can be appreciable to one skilled in the art that the configuration of the TIM described herein is only for the purpose of illustration, but not to limit the invention to such configuration. Fig. 3 is an exemplary diagram of a beacon with another newly designed TIM structure according to the first embodiment of the invention. There are two kinds of bits for its traffic indication, one (U) for unicast frames buffered at AP, and the other (M) for multicast frames buffered at AP. Note that the TIMs in Fig 2 and Fig 3 present two structures which serve the same goal just by applying different two-bit allocation schemes. It is easy for one skilled in the art that other bit allocations as required are possible to achieve the same objective except for the above successive bits, as long as the presence of multicast frames is indicated in the TIM of the beacon. For example, we can even use three bits, U, M and B, corresponding to one station, to indicate unicast, multicast and broadcasting traffic destined to individual stations.

After the AP broadcasts a TIM element contained in a beacon, each mobile station received this message has to check the bitmap and find its unicast and multicast traffic indication bits in the TIM.

In the embodiments of the invention, the function of bits in bitmap control field and virtual bitmap field has been changed. As mentioned above, the M bits in the virtual bitmap field are traffic indicators of the multicast frames in the AP buffer. Each associated wireless station is allocated one such bit in virtual bitmap to handle the multicast frames. Setting this bit to 1 means any one or both of the following events happen 1) one or more multicast frames destined for this wireless station have been buffered at the AP; 2) one or more broadcast frames have been buffered at the AP. In addition, this bit should be set to zero if there are no pending broadcast frames and the multicast frames buffered at the AP. Therefore, this bit is actually used for the buffered multicast/broadcast frames, and it considers the broadcast frames as a special multicast frames. Therefore, in case any of the M bit s in the bitmap are set to 1, the first bit of the bitmap control field AID 0 of TIM should also be set to 1.

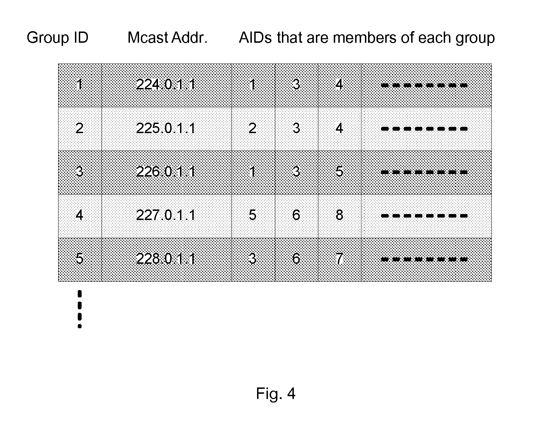

According to the above arrangement, a station will wake up to receive the buffered frames at the AP as long as the corresponding M bit is set to 1 in the DTIM. In order to set the M bits effectively, an IGMP (Internet Group Multicast Protocol)-like group membership look-up table is maintained at AP to differentiate all multicast groups. The look-up table can be created and maintained by IGMP message snooping at AP. Fig. 4 is an exemplary structure of this table. This look-up table establishes a mapping from a multicast group (identified by its multicast address) to all the mobile stations (represented by their AIDs) in the BSS that are members of this multicast group. Each time before a DTIM is transmitted, the AP checks all the buffered multicast frames and set these multicast bits to 1 according to the look-up in the table. This mapping provides a group-level granularity for supporting multicast in power management. In addition, the AP will check whether there are buffered broadcast frames to set all the M bits to 1.

Establishing and maintaining of such table is a procedure similar to IGMP protocol does. It is easy for one skilled in the art to create such table by sniffing IGMP messages coming from uplink router and downlink mobile stations within the BSS with various means.

The AID 0 in the virtual bitmap control field is referred as B/M bit, which is a traffic indicator of the broadcast/multicast frames in the AP buffer. This bit is set to 1 only in DTIMs if there are broadcast/multicast frames buffered at AP. This B/M bit should be set to zero if there are no pending broadcast frames and the multicast frames buffered at the AP. However, according to the embodiment of the invention, set B/M bit to 1 does not mean all stations shall wake up to receive buffered frames, which is different with that in the prior art. The station still need to check the M bit to determine its states.

Although it seems that it is not very necessary to set B/M to 1 according to the embodiment, it has compatibility with stations in the prior art. The stations in the prior art can not check M bits for the multicast/broadcast frames, but they can still check the B/M bit to get such information so as to determine their states according to the specification 802.11.

The U bits in the virtual bitmap field are Traffic indicators of the unicast frames at the AP buffer. Each bit matches exactly one station, paired with an M bit, and it is set to 1 if there are unicast frames buffered at the AP buffer and destined to corresponding station. Thus, the function of U bits is the same as that in the original 802.11 TIMs.

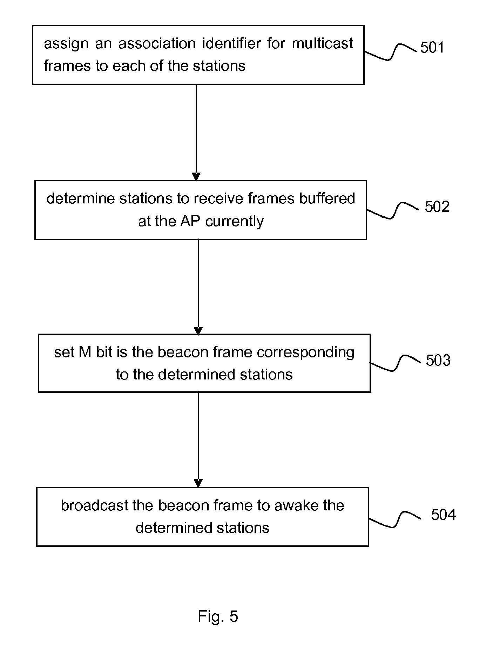

Fig. 5 is a flow chart depicting a method for sending multicast/broadcast message in the communication system according to the embodiment of the invention.

At step 501, the AP assigns the association identifier for multicast frames in a beacon frame to each of the communication units respectively according to the above arrangement, and receives a multicast message directed to one or more of the plurality of multicast groups or broadcast message. At step 502, the wireless stations to receive the frames buffered currently are determined according to the multicast group address. This can be accomplished by using the look-up table in Fig.4 according to the multicast address. Preferably, the AP determines firstly whether there are buffered broadcast frames, and if the result is yes, set all the M bits corresponding to all the stations to 1. Thus, the look-up table does not need to be detected.

At step 503, set the M bits in the beacon frame corresponding to the determined wireless stations to 1. In addition, the U bits and the B/M bit are also set according to the above-mentioned method. Then, at step 504, the AP broadcasts a beacon frame to selectively awaken all wireless stations belonging to said multicast address so as to transmit the multicast frames thereto. This can be accomplished by transmitting a beacon frame with the set TIM to the wireless stations. In this manner, any other wireless stations not belonging to the multicast address are allowed to remain asleep. Of course, if the U bit for a station is set, the station still needs to wake up to receive the unicast frames.

The wireless stations that are being selectively awakened are programmed to remain awake sufficiently long, e.g. to receive the buffered messages. This can be accomplished by the use of a timer and/or a counter. The awakened wireless station can also be programmed to remain awake until the detection of the next DTIM beacon or until the end of the session.

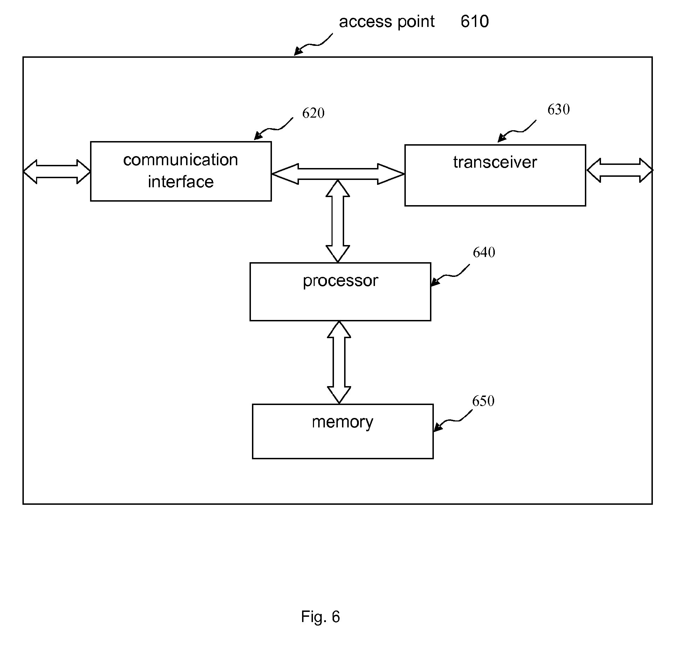

Fig. 6 is an exemplary configuration of an AP 610 in accordance with the present invention. The AP 610 works as the central coordinator and scheduler, and comprises a communication interface 620 for handing communication with other portions of the WLAN through a communication path and receiving frames therefrom, a processor 640 coupled with the communication interface 620 for processing the communication and for controlling the AP 610, a transceiver 630 coupled to the processor 640 and communication interface 620 for communicating with the wireless stations and sending frames thereto. It is known that the transceiver 630 can also be separated to a transmitter and a receiver as required. In addition, the AP 610 also includes a memory 650 for storing the buffered frames, the above-mentioned look-up table, and executable instructions and data for programming the processor 640 in according to the present invention. It will be appreciable that the communication interface 620, the processor 640, the transceiver 630 and the memory 650 can be combined in whole or in part and fabricated as an integrated circuit.

As pointed out above, before a beacon frame is launched, the AP 610 assigns two bits to each wireless station, wherein one bit is used for unicast of a station and the other for multicast of the station. Then, the AP 610 fills the TIM structure by setting the corresponding M bits to 1 if there are buffered multicast/broadcast frames, setting the corresponding U bits to 1 if there are buffered unicast frames, and setting the B/M bit to 1 if there are buffered multicast or broadcast frames. That is, the AP transmits the buffered frames according to the above flow chart.

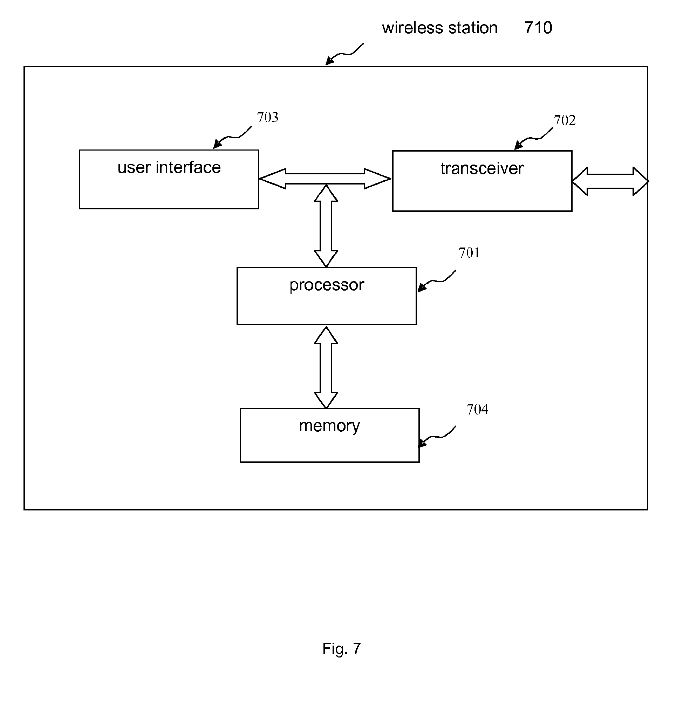

Fig. 7 is an exemplary configuration of a wireless station 710 in accordance with the present invention. The wireless station 710 comprises a processor 701 for controlling the station 710, a transceiver 702 coupled to the processor 701 for communicating with the AP 610, a user interface 703 comprising well-known elements, such as a keypad, a display, and audio transducers. In addition, the wireless station 710 includes a memory 704 coupled to the processor 701 comprising executable instructions and data for programming the processor 701 in accordance with the present invention. It will be appreciable that the processor 701, the transceiver 702, and the memory 704 can be combined in whole or in part and fabricated as an integrated circuit.

Each station 710 in power saving mode shall power up to listen to the beacon periodically transmitted by the AP to check whether there are frames buffered in the AP. The station will wake up if the corresponding U bit or M bit is set to 1. However, the station does not wake up according to the B/M bit which can be used by the prior art stations.

### (Second Embodiment)

As for the setting of M bits in the TIM, another procedure can be used. The M bits are used for only indicating the buffered multicast frames, and not for the buffered broadcast frames. The M/B bit is used for indicating the buffered multicast/broadcast frames.

In this embodiment, an important thing needs to be redesigned is the buffering structure at the AP, which is not detailed in the original 802.11 standards. We introduce triple separate queues for data buffering: broadcast queue, multicast queue and unicast queue. They are named for the types of frames that they are buffered.

Each buffering queue operates in a FIFO manner. One thing should be mentioned is that certain priorities have been assigned for these queues during the operating procedure. When a DTIM indicates the existence of all three kind of buffered frames, the AP shall transmit the frames in the broadcast queue first, giving a high priority to that queue, and then the multicast queue, which possesses a middle-level priority, and the unicast queue is handled last, which corresponds to a low priority. The priority-based queuing mechanism makes it possible for a station to sleep even during a beacon interval.

According to the above arrangement, when the B/M is set to 1, and the corresponding M bit is set to 0, the station will wait some times as required to receive the broadcast frames if broadcast frames are buffered at the AP. Then if there is no frame arriving, the station will be asleep. In addition, when the B/M is set to 0, and the corresponding M bit is set to 0, the station will stay asleep, and do not need to wait for the buffered frames.

Other arrangement and procedure for the AP and stations are same as that of the first embodiment; therefore, the corresponding description is omitted therein.

As described above, the method and arrangement of the present invention provides a more efficient and fine-granular power saving scheme. According to the invention, the multicast frames from different groups can be differentiated and thereafter it can avoid all stations from wakening up to receive the multicast frame of some groups of stations. In addition, the method can be compatible with the prior art method in 802.11 standard.

Although the specific process based on the principle of the present invention is described above, it cannot be considered to be a limit to the present invention. For example, as described above, WLAN is adapted to illustrate the embodiments of the invention. However, it is apparent to one skilled in the art that other communication system with AP and communication units can also be adapted. In the above embodiments, data is transmitted and received in the form of frame. However, it is apparent to one skilled in the art that any form of data can also be adapted. In addition, the association identifier is transmitted in the beacon frame. However, it is apparent to one skilled in the art that the association identifier can be transmitted in any message.

The foregoing merely illustrates the principles of the invention and it will thus be appreciated that those skilled in the art will be able to devise numerous alternative arrangements which, although not explicitly described herein, embody the principles of the invention and are within its spirit and scope. It is to be understood that numerous modifications may be made to the illustrative embodiments and that other arrangements may be devised without departing from the spirit and scope of the present invention as defined by the appended claims.

## Claims

1. A method in a communication system for transmitting data from an access point to communication units capable of operating in a power-saving mode, the method comprising:
assigning, by the access point, an first association identifier in a message to each of the communication units respectively to indicate the presence of respective buffered multicast data;
setting, by the access point, the first association identifiers corresponding to the communication units belonging to one or more multicast groups to receive multicast data buffered at the access point currently; and
broadcasting, by the access point, the message to awake the communication units belonging to the one or more multicast groups so as to transmit the buffered multicast data thereto.

2. The method according to claim 1, wherein the communication system operates in accordance with IEEE specification 802.11, and wherein
the step of setting further comprises setting a traffic indicator bit to indicate the presence of any buffered multicast data or broadcast date.

3. The method according to claim 2, wherein the first association identifier is a bit in a Traffic Indication Map of a beacon message.

4. The method according to any one of claims 1 to 3, wherein the step of assigning further comprises assigning an second association identifier in the message to each of the communication units respectively to indicate the presence of respective buffered unicast data; and
the step of setting further comprises setting the second association identifiers corresponding to the communication units to receive unicast data buffered at the access point currently.

5. The method according to claim 4, wherein when broadcast data are buffered at the access point, the step of setting further comprises setting the second association identifiers corresponding to all of the communication units, and setting the traffic indicator bit into 1.

6. The method according to claim 4, wherein when broadcast data are buffered at the access point, the step of setting further comprises setting the traffic indicator bit into 1, and
transmitting the buffered broadcast data prior to transmitting the buffered multicast data, after broadcasting the message.

7. The method according to any one of claims 1 to 3, wherein the communication system includes a look-up table for mapping a multicast group to all the communication units that are members of the multicast group.

8. An access point in a communication system for transmitting data to communication units capable of operating in a power-saving mode, the access point comprising:
a memory for buffering data to be transmitted to the communication units which are operating in the power-saving mode; and
a processor for assigning an first association identifier in a message to each of the communication units respectively to indicate the presence of respective buffered multicast data; and setting the first association identifiers corresponding to the communication units belonging to one or more multicast groups to receive multicast data buffered at the access point currently; and
a transmitter for transmitting the message to awake the communication units belonging to the one or more multicast groups and transmitting the buffered multicast data thereto.

9. The access point according to claim 8, wherein the communication system operates in accordance with IEEE specification 802.11, and wherein
the processor further sets a traffic indicator bit to indicate the presence of any buffered multicast data or broadcast date.

10. The access point according to claim 9, wherein the first association identifier is a bit in a Traffic Indication Map of the beacon message.

11. The access point according to any one of claims 8-10, wherein the processor further assign an second association identifier in the message to each of the communication units respectively to indicate the presence of respective buffered unicast data; and
further set the second association identifiers corresponding to the communication units to receive unicast data buffered at the access point currently.

12. The access point according to 11, wherein when broadcast data are buffered at the access point, the processor determines all of the communication units; sets the first association identifiers corresponding to all of the communication units, and sets the traffic indicator bit corresponding to the association identifier 0 into 1.

13. The access point according to claim 11, wherein when broadcast data are buffered at the access point, the processor sets the traffic indicator bit corresponding to the association identifier 0 into 1, and the transmitter transmits the buffered broadcast data prior to the buffered multicast data, after broadcasting the message.

14. The access point according to any one of claims 8 to 10, wherein the memory includes a look-up table for mapping a multicast group to all the communication units that are members of the multicast group.

15. A method used in a communication unit capable of operating in a power-saving mode for receiving data from an access point in a communication system, the method comprising:
receiving a message from the access point through the communication system;
checking an first association identifier for the communication unit in the message, which is pre-assigned by the access point to indicate the presence of buffered multicast data to be transmitted to the communication unit; and
waking up to receive the multicast data if the first association identifier is set.

16. The method according to claim 15, wherein the communication system operates in accordance with IEEE specification 802.11.

17. The method according to claim 15 or 16, wherein the step of checking further comprises checking an second association identifier for the communication unit in the message, which is pre-assigned by the access point to indicate the presence of buffered unicast data to be transmitted to the communication unit; and
The step of waking up further comprises waking up to receive the unicast data if the second association identifier is set.

18. The method according to claim 15 or 16, further comprising before the step of checking, determining whether a traffic indicator bit in the message corresponding to the association identifier 0 is set, and waking up for a predetermined time if the traffic indicator bit is set to 1, so at to receive broadcast data if buffered at the access point.

19. A communication unit capable of operating in a power-saving mode in a communication system for receiving data from an access point, the communication unit comprising:
a receiver for receiving data and a message from the access point; and
a processor for cooperating with the receiver to
receive a message from the access point through the communication system;
check an first association identifier for the communication unit in the message, which is pre-assigned by the access point to indicate the presence of buffered multicast data including data to be transmitted to the communication unit; and
wake up the communication unit to receive the multicast data if the first association identifier is set.

20. The communication unit according to claim 19, wherein the communication system operates in accordance with IEEE specification 802.11.

21. The communication unit according to claim 19 or 20, wherein processor further checks an second association identifier for the communication unit in the message, which is pre-assigned by the access point to indicate the presence of buffered unicast data to be transmitted to the communication unit; and wakes up the communication unit to receive the unicast data if the second association identifier is set.

22. The communication unit according to claim 19 or 20, wherein before check the first association identifier, the processor determines whether a traffic indicator bit in the message corresponding to the association identifier 0 is set, and wakes up the communication unit for a predetermined time if the traffic indicator bit is set to 1, so that the receiver receives broadcast data if the broadcast data are buffered at the access point.
